# EUROPEAN PATENT APPLICATION

(11) **EP 4 557 459 A1**
(43) Date of publication of application: **21.05.2025**
(21) Application number: 24809537.4
(22) Date of filing: 08.07.2024
(51) Int. Cl.: H01M 10/613, H01M 10/643, H01M 10/6567

(54) **LIQUID-COOLED BATTERY SYSTEM**

(30) Priority: 28.09.2023 CN 202322669500 U; 28.09.2023 CN 202311282488
(71) Applicant: Eve Energy Co., Ltd., Huizhou, Guangdong 516006 (CN)
(72) Inventor: LI, Fang, Huizhou Guangdong 516006 (CN); WANG, Haixu, Huizhou Guangdong 516006 (CN)
(74) Representative: Berggren Oy
(86) International application number: PCT/CN2024/104263
(87) International publication number: WO 2025/066407

(57) **Abstract**

A liquid-cooling battery system is provided. The liquid-cooling battery system includes a plurality of cells and one or more boxes, at least one surface of each of the one or more boxes is provided with a plurality of through holes, a liquid-cooling cavity is formed inside each of the one or more boxes, an inner portion of the liquid-cooling cavity is configured to circulate a cooling medium, the liquid-cooling cavity is provided with one or more liquid inlets and one or more liquid outlets, each of the plurality of cells passes through each of the plurality of through holes and is partially immersed in the cooling medium in the liquid-cooling cavity.

## Description

### CROSS-REFERENCE TO RELATED APPLICATION

This application claims priority to and the benefit of Chinese Patent Application No. 202322669500.1, filed on September 28, 2023, and Chinese Patent Application No. 202311282488.7, filed on September 28, 2023, the disclosure of which are incorporated herein by reference in their entireties.

### TECHNICAL FIELD

The present disclosure relates to the field of battery technology, and in particular, to liquid-cooling battery systems.

### BACKGROUND

With the explosive growth of the energy storage industry of lithium battery, the operational safety and stability of the battery system has received increasing attention within the industry.

After the cylindrical cells are grouped, due to the large number of cells and the dense grouping, serious heating occurs during the charging and discharging process, which affects product life and safety. Currently, liquid-cooling temperature control is the mainstream for cylindrical battery systems in the industry. For liquid-cooling temperature control, the cylindrical structure mostly adopts the coiled pipe and liquid-cooling plate process. The cambered surface of the coiled pipe is in contact with the cylindrical surface of the cell through a thermal conductive pad or a thermal conductive adhesive to transfer heat and dissipate heat.

### SUMMARY

However, the structure of the coiled pipe results in complex grouping process and low grouping efficiency, and the contact area between the coiled pipe and the cell is small, which can only satisfy the heat dissipation requirements of small cylindrical battery with a smaller diameter. While for larger battery with a larger diameter, this heat dissipation manner cannot effectively dissipate the heat, and the safety and the life of the battery system will still be affected.

The present disclosure provides a liquid-cooling battery system. The liquid-cooling battery system includes a plurality of cells and one or more boxes, at least one surface of each of the one or more boxes is provided with a plurality of through holes, a liquid-cooling cavity is formed inside each of the one or more boxes, an inner portion of the liquid-cooling cavity is configured to circulate a cooling medium, the liquid-cooling cavity is provided with one or more liquid inlets and one or more liquid outlets, each of the plurality of cells passes through each of the plurality of through hole and is partially immersed in the cooling medium in the liquid-cooling cavity.

### Beneficial effects

In the liquid-cooling battery system provided by the present disclosure, multiple cells are inserted into the box, and then the box inserted with the multiple cells is sealed. Firstly, by using such a structure, multiple cells can be respectively and directly immersed in the cooling medium in the box, thereby maximizing the heat dissipation area of the cell during charging and discharging process. The heat generated by the cell during the charging and discharging process is directly transferred to the cooling medium without passing through a thermal conductive adhesive, the part of the cell inserted into the box is immersed in the cooling medium, and the contact area between the cell and the cooling medium in which the cell is immersed is maximized, so that the heat dissipation efficiency is higher. Secondly, in the present disclosure, the cell is directly immersed into the cooling medium in the liquid-cooling box to achieve the integration of the liquid-cooling box. There is no need to dispose liquid-cooling plates, water pipes and joints next to the cell, which is easier to implement and is conducive to addressing cost problems. Thirdly, the cell is directly disposed inside the liquid-cooling cavity, the installation processes such as adhesive coating, curing, stacking, and hoisting are eliminated, thereby resulting in higher production efficiency.

### BRIEF DESCRIPTION OF THE DRAWINGS

FIG. 1 is a schematic diagram of a structure of a liquid-cooling battery system according to some embodiments of the present disclosure;
FIG. 2 is a schematic diagram of an exploded structure of a liquid-cooling battery system according to some embodiments of the present disclosure;
FIG. 3 is a cross-sectional schematic diagram of a longitudinal cross-sectional structure of a liquid-cooling battery system according to some embodiments of the present disclosure;
FIG. 4 is a schematic diagram of an enlarged structure of part A in FIG. 3;
FIG. 5 is a schematic diagram of an enlarged structure of part A of another liquid-cooling battery system according to some embodiments of the present disclosure;
FIG. 6 is a cross-sectional schematic diagram of a longitudinal cross-sectional structure of another liquid-cooling battery system according to some embodiments of the present disclosure;
FIG. 7 is a schematic diagram of a structure of sealing rings according to some embodiments of the present disclosure.

### Explanation of the reference numerals:

1. Cell; 11. Insulating film; 2. Box; 21. Through hole; 211. Sealing ring; 22. Liquid-cooling cavity; 221. Reinforcing rib; 23. Liquid inlet; 24. Liquid outlet; 25. Adhesive filling layer; 3. First side beam; 31. Integrated inflow pipe; 32. First welding end plate; 4. Second side beam; 41. Integrated outflow pipe; 42. Second welding end plate.

### DETAILED DESCRIPTION

In the description of the present disclosure, it should be understood that the words "first" and "second" are only used for descriptive purposes and cannot be understood as indicating or implying relative importance or indicating the number of indicated technical features. Therefore, the features defined as the "first" and the "second" may explicitly or implicitly include one or more features. In the description of the present disclosure, "a plurality of" means two or more than two, unless otherwise explicitly and specifically limited.

In the present disclosure, the word "exemplary" refers to "serving as an example, illustration, or explanation". Any embodiment described herein as "exemplary" is not necessarily to be construed as preferred or more advantageous over other embodiments. The following description is presented to enable any person skilled in the art to achieve and use the present disclosure. In the following description, details are set forth for the purpose of explanation. It will be understood that one of ordinary skill in the art will recognize that the present disclosure can be achieved without these specific details. In other examples, well-known structures and processes have not been described in detail herein to avoid obscuring the description of the present disclosure due to unnecessary details. Therefore, the present disclosure is not intended to be limited to the embodiments described but is consistent with the widest scope in accord with the principles disclosed in the present disclosure.

The battery system is generally accompanied by a heat release process during the charging and discharging process. During the heat release process, it is generally required to cool down the battery system, so that the battery system can work in a more suitable operating temperature environment.

In the battery system, cells 1 are generally combined into battery modules, and air-cooling heat dissipation or liquid-cooling heat dissipation are performed inside the battery module. Liquid-cooling heat dissipation involves transferring heat and exchanging heat by the complex coiled pipes (with coolant filled in the coiled pipes) and the thermal conductive adhesive disposed between adjacent battery modules. The efficiency of air-cooling heat dissipation is lower than the efficiency of liquid-cooling heat dissipation. However, by disposing complex coiled pipes and thermal conductive adhesive between adjacent battery modules to dissipate heat, it relies heavily on the heat transfer capability of the thermal conductive adhesive itself, and since the contact area between the coiled pipe and the battery module is small, the heat dissipation area is small, thereby resulting in low heat dissipation efficiency. Although the air-cooling heat dissipation or liquid-cooling heat dissipation described above can satisfy the heat dissipation requirements of small batteries, the heat dissipation efficiency is seriously insufficient for large batteries, and the installation process is complicated and the material cost is high.

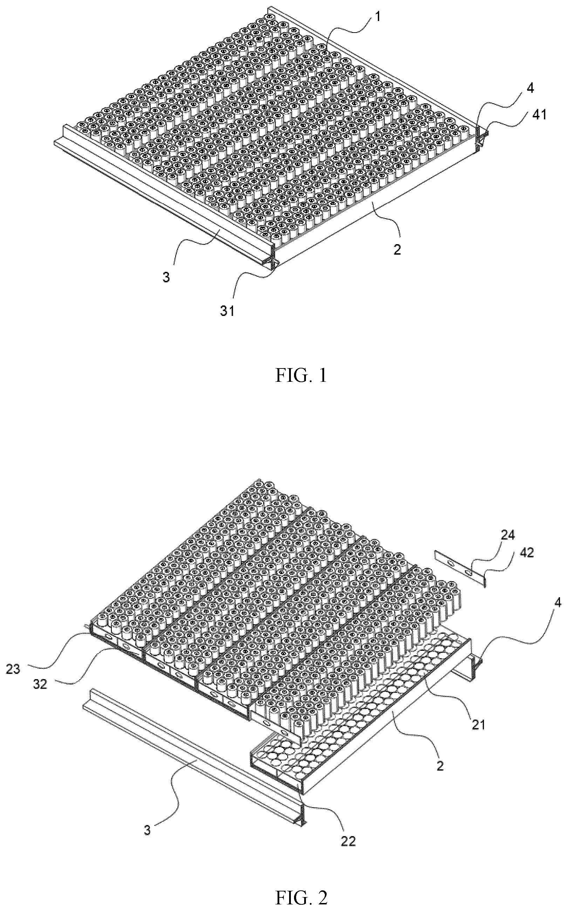

Based on the above, embodiments of the present disclosure provide a liquid-cooling battery system. Referring to FIG. 1 and FIG. 2, FIG. 1 is a schematic diagram of a structure of a liquid-cooling battery system according to some embodiments of the present disclosure, and FIG. 2 is an exploded schematic diagram of a liquid-cooling battery system according to some embodiments of the present disclosure. The liquid-cooling battery system includes a plurality of cells 1 and one or more boxes 2, a surface of the box 2 is provided with a plurality of through holes 21, a liquid-cooling cavity 22 is formed inside the box 2, an inner portion of the liquid-cooling cavity 22 is configured to circulate a cooling medium, the liquid-cooling cavity 22 is provided with one or more liquid inlets 23 and one or more liquid outlets 24, each of the cells 1 passes through each of the through holes 21 and is partially immersed in the cooling medium in the liquid-cooling cavity 22.

It should be understood that the position where the through hole 21 and the cell 1 are in contact needs to be sealed to form a sealed liquid-cooling cavity 22, the position can be sealed by adhesive coating or adhesive filling, so as to prevent the cooling medium from flowing out from the inside of the liquid-cooling cavity 22, and thereby affecting other components on the box 2 of the battery system, such as affecting the normal operation of the busbar and the battery temperature detecting system.

It should be understood that the shape of the box 2 can be a cube, a cuboid, a cylinder with a hexagonal top surface, an ellipsoid, or an irregular box.

The cooling medium can be a coolant inside a general coiled pipe, for example, it can be water, ionized water, or oil.

It should be noted that in the related technology, during the preparation process, the coiled pipe configured to be in direct contact with the cell 1 for achieving heat transfer needs to be coated with adhesive firstly, then the coiled pipe coated with adhesive is bonded to the cell 1, then the adhesive coated on the coiled pipe is cured, then the battery modules are stacked to a battery group after the coated adhesive is cured, and finally the stacked battery group is hoisted into a protective box to form a battery pack.

Device for circulating cooling medium and heat dissipating device may be connected between the liquid inlet 23 and the liquid outlet 24 outside the liquid-cooling cavity 22, such as a pressure pump to increase fluid pressure and an evaporator configured to dissipate heat to the outside rapidly. In this way, when the liquid-cooling cavity 22 receives a large amount of heat generated from the charging and discharging process of the cell 1, the heat can firstly be quickly diluted by a large amount of cooling medium, then taken out by the liquid outlet 24 to the evaporator for external heat dissipation, and then the cooling medium after being fully heat-dissipated is sent back to the inner portion of the liquid-cooling cavity 22 through the liquid inlet 23 by the pressure pump for preliminary heat dissipation, thereby achieving a good circulation and heat dissipation effect.

**In** the embodiments of the present disclosure, multiple cells 1 independently disposed are inserted into the box 2, and then the box 2 in which the multiple cells 1 are inserted is sealed. Firstly, by using such a structure, multiple cells 1 can be respectively and directly immersed in the cooling medium, thereby maximizing the heat dissipating area of the cell 1 during charging and discharging process. The heat generated by the cell 1 during the charging and discharging process is directly transferred to the cooling medium without passing through the thermal conductive adhesive, the periphery of the cell 1 is completely immersed in the cooling medium, and the contact area between the cell 1 and the cooling medium in which the cell is immersed is maximized, so that the heat dissipation efficiency is higher. Secondly, in the present disclosure, the cell 1 is directly immersed into the cooling medium in the liquid-cooling box. There is no need to dispose liquid-cooling plates, water pipes and joints next to the cell, which is easier to implement and is conducive to addressing cost problems. Thirdly, the cell 1 is directly disposed inside the liquid-cooling cavity 22, the installation processes such as adhesive coating, curing, stacking, and hoisting are eliminated, thereby resulting in higher production efficiency.

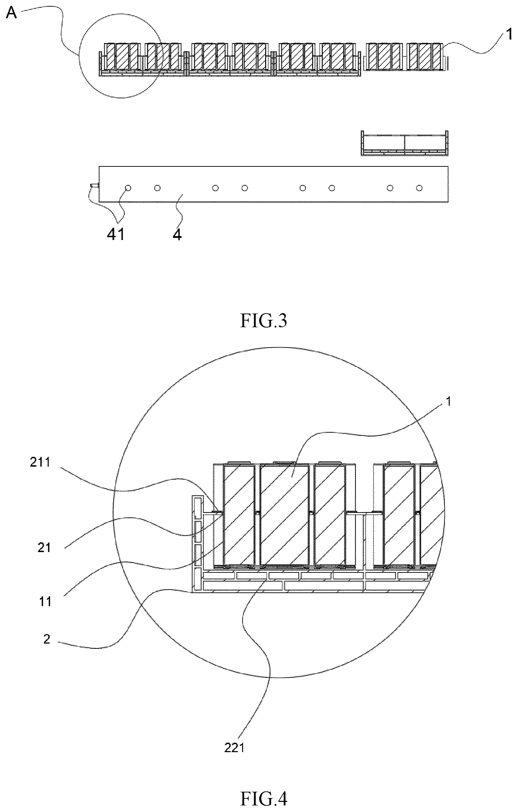

Referring to FIG. 3 to FIG. 4, FIG. 3 is a cross-sectional schematic diagram of a longitudinal cross-sectional structure of a liquid-cooling battery system according to some embodiments of the present disclosure, and FIG. 4 is an enlarged schematic diagram of part A in FIG. 3. In some embodiments of the present disclosure, the plurality of through holes 21 are located on one side wall of the box 2. One end of the cell 1 passes through the through hole 21 and is immersed in the cooling medium in the liquid-cooling cavity 22, and the other end of the cell is located outside the liquid-cooling cavity 22.

In some embodiments of the present disclosure, the box 2 is configured as a box with through holes 21 disposed on the top surface, the bottom end of the cell 1 passes through the through hole 21, so that the lower portion of the cell 1 can be immersed in the cooling medium. The busbar is disposed on the top portion of the cell 1, so that the cell 1 with a larger diameter can have a good heat dissipation effect during the normal charging and discharging process.

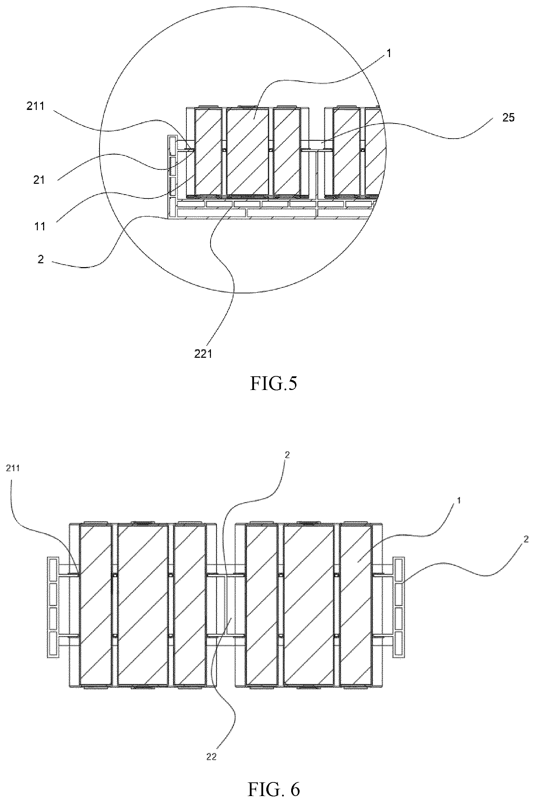

Referring to FIG. 6, FIG. 6 is a schematic cross-sectional diagram of a longitudinal cross-sectional structure of another liquid-cooling battery system according to some embodiments of the present disclosure. In some embodiments of the present disclosure, the box 2 has two side walls disposed oppositely, the plurality of through holes 21 are respectively located on two side walls, and the liquid-cooling cavity 22 is formed between the two side walls. The cell 1 passes through two through holes 21 disposed oppositely on two side walls in sequence. The cell 1 is provided with a first end, a middle section and a second end disposed in sequence. The two side walls of the box 2 are located between the first end and the second end, and the middle section is immersed in the cooling medium in the liquid-cooling cavity 22.

In some embodiments of the present disclosure, the box 2 is configured as a box with through holes 21 disposed both on the top surface and the bottom surface, the cell 1 passes through two through holes 21, so that the middle portion of the cell 1 can be immersed in the cooling medium. The busbar is disposed on the top portion and the bottom portion of the cell 1, so that the cell 1 with a larger diameter can have a good heat dissipation effect during the normal charging and discharging process.

In some embodiments of the present disclosure, referring to FIG. 5, FIG. 5 is a schematic diagram of an enlarged structure of part A of another liquid-cooling battery system according to some embodiments of the present disclosure, and the position of part A can be referred to that in FIG. 3. The liquid-cooling battery system further includes an adhesive filling layer 25, and the adhesive filling layer 25 is disposed on the surface of the box 1 where the through holes 21 are disposed, and the adhesive filling layer 25 is configured to form a sealing structure between the cell 1 and the through hole 21, so as to seal the gap between the cell 1 and the through hole 21.

It should be understood that the adhesive filling layer 25 can be filled on the entire top surface of the box 2, or only filled on part of the top surface of the box 2 close to the through holes 21, as long as the through holes 21 are sealed.

In some embodiments of the present disclosure, the adhesive filling layer 25 is provided to ensure the sealing of the through holes 21 and prevent the cooling medium from overflowing from the through holes 21.

Referring to FIG. 4 and FIG. 5, in some embodiments of the present disclosure, the side surface of the cell 1 is wrapped with an insulating film 11.

In some embodiment of the present disclosure, by wrapping the insulating film 11 on the side surface of the cell 1, current leakage is less likely to occur between the surface of the cell 1 and the cooling medium, thereby enabling the entire battery system to operate more safely and stably.

Referring to FIG. 5, in some embodiments of the present disclosure, a sealing ring 211 is disposed between the through hole 21 and the cell 1.

In some embodiments of the present disclosure, the sealing ring 211 is disposed between the through hole 21 and the cell 1, so that the adhesive is not likely to overflow into the inner portion of the liquid-cooling cavity 22 through the gap between the through hole 21 and the cell 1 due to the sealing effect of the sealing ring 211 during the adhesive filling process.

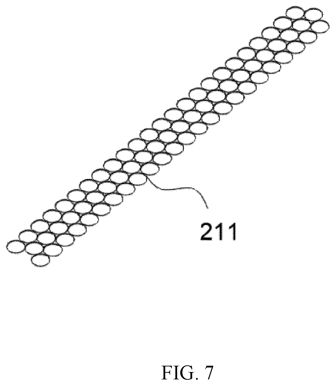

Referring to FIG. 5 and FIG. 7, FIG. 7 is a schematic diagram of a structure of sealing rings according to some embodiments of the present disclosure. A plurality of sealing rings 211 are connected in sequence to form an integrated structure, and the top edge of the sealing ring 211 is bent outward, so as to fit the top end surface of the through hole 21.

In some embodiments of the present disclosure, the sealing ring 211 is disposed inside the through hole 21, the plurality of sealing rings 211 are disposed into an integrated structure, and the top portion of each of the sealing rings 211 is bent outward, so that the plurality of sealing rings 211 can be installed very easily in the plurality of through holes 21 as a whole and can exactly fit the aperture of each of the inner walls of the through holes 21, and prevent the adhesive from overflowing through the through holes 21 into the liquid-cooling cavity 22 during the adhesive filling process above or below the through holes 21, and thereby optimizing the installation process.

Referring to FIG. 2 and FIG. 3, FIG. 2 is an exploded schematic diagram of a liquid-cooling battery system according to some embodiments of the present disclosure, and FIG. 3 is a cross-sectional schematic diagram of a longitudinal cross-section of a liquid-cooling battery system according to some embodiments of the present disclosure. In some embodiments of the present disclosure, the liquid-cooling battery system includes a plurality of boxes 2, the first side beam 3, and the second side beam 4. The first side beam 3is installed at one end of the plurality of boxes 2, and the second side beam 4 is installed at the other end of plurality of boxes 2. An integrated inflow pipe 31 is disposed inside the first side beam 3, and the integrated inflow pipe 31 is connected to a plurality of liquid inlets 23. An integrated outflow pipe 41 is disposed inside the second side beam 4, and the integrated outflow pipe 41 is connected to a plurality of outlets 24.

It should be understood that the plurality of boxes 2 can be expanded along the same plane, or can be stacked along a vertical plane to achieve capacity expansion. Correspondingly, the first side beam 3 can be provided with multiple rows of ports of the integrated inflow pipe 31, and the second side beam 4 can be provided with multiple rows of ports of the integrated outflow pipe 41, so as to realize the expansion along the vertical plane of the plurality of boxes 2.

In some embodiments of the present disclosure, the liquid-cooling battery system is composed of the first side beam 3, the second side beam 4 and a plurality of boxes 2, the integrated inflow pipe 31 is disposed inside the first side beam 3, and the integrated outflow pipe is 41 is disposed inside the second side beam 4, so that the entire battery system can realize a free combination of unlimited number of boxes 2, the first side beam 3 and the second side beam 4 by cutting the lengths of the first side beam 3 and the second side beam 4, thereby facilitating subsequent expansion of the boxes 2.

In some embodiments of the present disclosure, a first interface sealing member is connected between the liquid inlet 23 and the integrated inflow pipe 31, and a second interface sealing member is connected between the liquid outlet 24 and the integrated outflow pipe 41.

It should be noted that the first interface sealing member may be a sealing gasket sandwiched between the liquid inlet 23 and the first side beam 3, or may be an adhesive coating layer disposed on the inner side surface of the first side beam 3; it can also be a sealing ring disposed between the liquid inlet 23 and the integrated inflow pipe 31. The second interface sealing member can be a sealing gasket sandwiched between the liquid outlet 24 and the second side beam 4, it can be an adhesive coating layer disposed on the inner side surface of the second side beam 4, or it can be a sealing ring disposed between the liquid outlet 24 and the integrated outflow pipe 41.

In some embodiments of the present disclosure, the first interface sealing member is disposed between the liquid inlet 23 and the integrated inflow pipe 31, and the second interface sealing member is disposed between the liquid outlet 24 and the integrated outflow pipe 41, so that the connection between the integrated inflow pipe 31 and the liquid inlet 23, and the connection between the integrated outflow pipe 41 and the liquid outlet 24 are not prone to cooling medium leakage.

Referring to FIG. 2, in some embodiments of the present disclosure, two end surfaces of the box 2 are open, and two end surfaces of the box 2 are respectively connected to the first side beam 3 and the second side beam 4 to form the liquid-cooling cavity 22.

In some embodiments of the present disclosure, the box 2 is configured as a box with two ends open, and the first side beam 3 and the second side beam 4 are added, so that the length of each of the boxes 2, the length of each of the first side beam 3 and the second side beam 4 can be cut freely, and then the plurality of boxes 2 are welded with the first side beam 3 and the second side beam 4 with freely cut lengths, so as to realize that the liquid-cooling module composed of a plurality of boxes 2 can be expanded along the length direction and the width direction of the battery system respectively.

Referring to FIG. 5, in some embodiments of the present disclosure, reinforcing ribs 221 are disposed on the box 2. Specifically, reinforcing ribs 221 are disposed on the housing of the box 2. Generally, the box 2 includes a bottom wall, a top wall, and side walls, and sometimes, the box includes end walls at two ends of the box 2. The bottom wall, top wall, side walls and end walls constitute the housing of the box 2.

In some embodiments of the present disclosure, reinforcing ribs 221 are disposed on the housing of the box 2, so that the box 2 is less likely to deform when the cell 1 undergoes thermal expansion and explosion or when the box is collided, thereby improving the service life of the box 2. In addition, the body of the housing of the box 2 can also be provided with a hollowed structure for heat preservation of the cooling medium. As an example, referring to FIG. 5, each of the end wall and the bottom wall of the box 2 is configured as a hollowed structure. Exemplarily, filling materials such as foam adhesive can also be filled in the hollowed structure to achieve heat preservation of the liquid-cooling cavity 22.

Referring to FIG. 3, in some embodiments of the present disclosure, a mounting groove is disposed on the inner side of each of the first side beam 3 and the second side beam 4 along the length direction of the first side beam 3 or the second side beam 4 respectively, and the mounting groove fits with the end portion of the box 2.

It should be understood that the mounting groove can be configured as an elongated groove type or as a trench hole type.

Mounting grooves are disposed on the inner sides of the first side beam 3 and the second side beam 4 along the length direction, and then the boxes 2 are welded one by one to the mounting grooves on the inner sides of the first side beam 3 and the second side beam 4. Since the height of the box 2 is adapted to the width inside the mounting groove, so the following functions can be achieved. Firstly, the end portions of the box 2 can be positioned when the box 2 is welded, so that all the boxes 2 are on the same level after the boxes 2 are installed. Secondly, because the connection strength between some of the boxes 2 and the first side beam 3 as well as the second side beam 4 after welding is not enough, under the limiting effects of the mounting groove along the upper and lower direction, and the limiting effects of adjacent box 2 thereto on this box 2 when the adjacent box 2 is connected to the first side beam 3 and the second side beam 4 along the left to right direction, it is ensured that this box 2 is not easily separated from the first side beam 3 and the second side beam 4, thereby alleviating the problem to a certain extent that the welding between the box 2 and the first side beam 3, and the second side beam 4 are easily detached.

Referring to FIG. 2, in some embodiments of the present disclosure, a first welding end plate 32 is disposed on one end surface of the box 2, and a second welding end plate 42 is disposed on the other end surface of the box 2, so as to form the liquid-cooling cavity 22.

When the first side beam 3 is directly welded to the end portion of the box body 2, the sealing performance of the welding may be subject to welding leakage due to negligence, which may lead to leakage of the cooling medium.

Therefore, after the two ends of the box 2 are cut, the two ends of the box 2 are firstly welded to the first welding end plate 32 and the second welding end plate 42 respectively to form a sealing structure, and after checking the sealing performance of each box 2, the box 2 is welded to the first side beam 3 and the second side beam 4, so as to ensure the sealing performance of the box 2 as much as possible after the box is welded to the first side beam 3 and the second side beam 4. Compared with the manner that the box 2 is directly configured as a sealed structure, this manner allows the length of the box 2 to be flexibly cut according to requirements.

In some embodiments of the present disclosure, the box 2 is in welded connection with the first side beam 3 and the second side beam 4.

In some embodiments of the present disclosure, the box 2, the first side beam 3 and the second side beam 4 are fixed by welding, thereby ensuring the connection strength between the box body 2 and the first side beam 3, as well as the second side beam 4, and improving the overall service life of the battery system.

In the above embodiments, each embodiment is described with its own emphasis. For parts that are not described in detail in a certain embodiment, reference can be made to the relevant descriptions of other embodiments described above, which are not described again herein.

## Claims

1. A liquid-cooling battery system comprising a plurality of cells (1) and one or more boxes (2), wherein at least one surface of each of the one or more boxes (2) is provided with a plurality of through holes (21), a liquid-cooling cavity (22) is formed inside each of the one or more boxes (2), an inner portion of the liquid-cooling cavity (22) is configured to circulate a cooling medium, the liquid-cooling cavity (22) is provided with one or more liquid inlets (23) and one or more liquid outlets (24), each of the plurality of cells (1) passes through each of the plurality of through holes (21) and is partially immersed in the cooling medium in the liquid-cooling cavity (22).

2. The liquid-cooling battery system according to claim 1, wherein the plurality of through holes (21) are located on one side wall of each of the one or more boxes (2), one end of each of the plurality of cells (1) passes through each of the plurality of through holes (21) and is immersed in the cooling medium in the liquid-cooling cavity (22), and another end of each of the plurality of cells is located outside the liquid-cooling cavity (22).

3. The liquid-cooling battery system according to claim 1, wherein each of the one or more boxes (2) is provided with two side walls disposed oppositely, the plurality of through holes (21) are respectively located on the two side walls, and the liquid-cooling cavity (22) is formed between the two side walls; and each of the plurality of cells (1) passes through two of the plurality of through holes (21) located on the two side walls in sequence, the each of the plurality of cells (1) is provided with a first end, a middle section and a second end disposed in sequence, the two side walls of each of the one or more boxes (2) are located between the first end and the second end, and the middle section is immersed in the cooling medium in the liquid-cooling cavity (22).

4. The liquid-cooling battery system according to claim 1, wherein the liquid-cooling battery system further comprises an adhesive filling layer (25), the adhesive filled layer (25) is disposed on the at least one surface of each of the one or more boxes (2) where the plurality of through holes (21) are disposed, and the adhesive filling layer (25) is configured to form a sealing structure between the plurality of cells (1) and the plurality of through holes (21).

5. The liquid-cooling battery system according to claim 1, wherein a side surface of each of the plurality of cells (1) is wrapped with an insulating film (11).

6. The liquid-cooling battery system according to claim 1, wherein each of a plurality of sealing rings (211) is disposed between each of the plurality of through holes (21) and each of the plurality of cells (1).

7. The liquid-cooling battery system according to claim 6, wherein the plurality of sealing rings (211) are connected in sequence to form an integrated structure, and a top edge of each of the plurality of sealing rings (211) is bent outward to fit a top end surface of each of the plurality of through holes (21).

8. The liquid-cooling battery system according to any one of claims 1 to 7, wherein the liquid-cooling battery system comprises multiple said boxes (2), a first side beam (3) and a second side beam (4), the first side beam (3) is installed at one end of the multiple said boxes (2), the second side beam (4) is installed at another end of the multiple said boxes (2), an integrated inflow pipe (31) is disposed inside the first side beam (3), the integrated inflow pipe (31) is connected to multiple said liquid inlets (23), an integrated outflow pipe (41) is disposed inside the second side beam (4), and the integrated outflow pipe (41) is connected to multiple said liquid outlets (24).

9. The liquid-cooling battery system according to claim 8, wherein a first interface sealing member is disposed between each of the multiple said liquid inlets (23) and the integrated inflow pipe (31), and a second interface sealing member is disposed between each of the multiple said liquid outlets (24) and the integrated outflow pipe (41).

10. The liquid-cooling battery system according to claim 8, wherein two end surfaces of each of the multiple said boxes (2) are open, the two end surfaces of each of the multiple said boxes (2) are connected to the first side beam (3) and the second side beam (4) respectively to form the liquid-cooling cavity (22).

11. The liquid-cooling battery system according to claim 8, wherein one end surface of each of the multiple said boxes (2) is provided with a first welding end plate (32), and another end surface of each of the multiple said boxes (2) is provided with a second welding end plate (42) to form the liquid-cooling cavity (22).

12. The liquid-cooling battery system according to claim 8, wherein an inner side of the first side beam (3) and an inner side of the second side beam (4) are respectively provided with mounting grooves along a length direction, each of the mounting grooves is adapted to end portions of each of the multiple said boxes (2), and the end portions of each of the multiple said boxes (2) are welded in the mounting grooves.

13. The liquid-cooling battery system according to any one of claims 1 to 7, wherein reinforcing ribs (221) are disposed on a housing of one of the one or more boxes (2).

14. The liquid-cooled battery system according to any one of claims 1 to 7, wherein a body of a housing of one of the one or more boxes (2) is a hollowed structure.

15. The liquid-cooling battery system according to claim 14, wherein the hollowed structure is filled with foam adhesive.
